# EUROPEAN PATENT SPECIFICATION

(11) **EP 1 290 565 B1**
(45) Date of publication and mention of the grant of the patent: **13.02.2008**
(21) Application number: 01934709.5
(22) Date of filing: 04.05.2001
(51) Int. Cl.: G06F 13/00, H04L 29/08

(54) **PROCEDURE AT TRANSMISSION/TRANSFER OF DATA FILES**
VERFAHREN BEI DER UBERTRAGUNG BZW. BEIM TRANSFER VON DATEIEN VON DATEN
PROCEDE DE TRANSMISSION/TRANSFERT DE FICHIERS DE DONNEES

(30) Priority: 05.05.2000 SE 0001665
(43) Date of publication of application: 12.03.2003
(73) Proprietor: TeliaSonera AB, 106 63 Stockholm (SE)
(72) Inventor: BERGSTEN, Anders, SE-977 52 Lulea (SE); BORG, Niklas, SE-120 58 Arsta (SE); JOHANSSON, Joachim, S-977 52 Lule (SE)
(74) Representative: Hopfgarten, Nils
(86) International application number: PCT/SE2001/000969
(87) International publication number: WO 2001/086453

(56) References cited:
- US-A- 5 299 197
- DATABASE WPI Week 199751, Derwent Publications Ltd., London, GB; AN 1997-557098, XP002958601 & JP 9 270 790 A (NTT DATA TSUSHIN KK) 14 October 1997 & PATENT ABSTRACTS OF JAPAN & JP 09 270 790 A (NTT DATA TSUSHIN KK)
- DATABASE WPI Week 199947, Derwent Publications Ltd., London, GB; AN 1999-556482, XP002958602 & JP 11 242 640 A (KOKUSAI DENSHIN DENWA CO LTD) 07 September 1999 & PATENT ABSTRACTS OF JAPAN & JP 11 242 640 A (KDD CORP)

## Description

### Technical field

The present invention relates to a procedure at transmission/transfer of a plurality of data files from a transmitting unit to a receiving unit.

### Technical background

At transmission of a data file from a file server to a client the protocol File Transfer Protocol (FTP) often is used. The document XP015006955 "File Transfer Protocol (FTP)" Internet Engineering Task Force, IETF, 1985-10-00, Postel J Reynolds, is the official specification of the File Transfer Protocol (FTP), and will be summarized in the rest of this paragraph. At the transmission a connection is established according to any transmission protocol, at FTP usually the transmission protocol Transfer Control Protocol (TCP). When a plurality of data files shall be transmitted/transferred, is in the case TCP a connection established for each data file, at which a negotiation takes place about which logic port that shall be used in the file server, respective the client. TCP is created for a situation where a command for transmission of a data file from a file server to a client is entered via a text based interface for each separate data file which shall be transmitted/transferred. In this case the duration of the entering/input is an essential part of the total time of the entering/input, set up, and transmission. Today, however, there exist graphical interface for transmission/transfer of data files, in which interface there are possibilities for marking of a large number of data files for transmission/transfer. The time for entering/input of the commands consequently have been reduced, which results in that the users experience the time of set up of the connection and the transmission/ transfer of the data file as the essential cause of delays. Further is in TCP also used so called "slow start" in order to avoid overload of the network. By "slow start" is meant that transmission speed of the connection in an initial phase is kept low to later increase to a speed which the available bandwidth allows. All in all, the set up of a new connection and the use of "slow start" for each data file which shall be transmitted/ transferred results in a poor utilization of the available bandwidth at transmission/transfer of a plurality of data files.

The patent document US-5,299,197 relates to a protocol which applies to one computer, which acts as a database server, several other computers, which act as terminals, and a communications line connecting them. Digital information passes back and forth between the server and a terminal asynchronously.

The operation is as follows: the terminal sends commands to the server. Such a command is typically a variable-length string which requests one or more packets from the server. The server then sends these packets to the terminal.

The packet is an encoded body of data. It has a header from which the type and length of data can be deduced. The content of the packets might be ordinary text. It might also be a graphics image, a file, a file fragment or other object.

Packets can also be tables of commands. The packets beng sent to the terminal are buffered and stored in memory, where it might be converted to a screen image, depending on the type of packet and the needs of the terminal user.

The processing of packets is such that the remote computer is always in control. It buffers the packet as it comes in, and the exact action depends on user settings and options at the remote computer.

The documents DATABASE WPI Week 199751, Derwent Publications Ltd., London, GB; AN 1997-557098, XP002958601 & JP 9 270 790 A (NTT DATA TSUSHIN KK) 14 October 1997, relates to a file transferring method, which involves dividing a file to be transferred into multiple blocks. The blocks are transmitted one by one from a file transmitting terminal to a file receiving terminal. Information regarding the order in which the blocks are divided is also transmitted and are used for reassembling the file using the receiving terminal.

A specific mechanism is provided for checking the order of received blocks and to locate the blocks that are not received within a predetermined time. When a block is not received, then a request is sent once again to the transmitting terminal to retransmit that particular block.

### Summary of the invention

A general aim of the present invention is to effect a method for transmission/transfer of a plurality of data files which utilizes available bandwidth in an efficient way. This aim is achieved by a procedure according to the enclosed patent claims.

The invention is based on the knowledge that the main bottleneck at transmission/transfer of a plurality of data files today is in the management and the communication at the establishing of a transmission channel. This is due to the fact that the bandwidth in the intra networks of today, and also in the Internet of today, has heavily increased, whereby the time it will take to make the transmission/transfer itself of a data file after a connection has been set up can be strongly reduced if the bandwidth were utilized efficiently. At the same time, the time for the set up of a transmission channel is essentially the same.

According to one aspect of the invention is achieved a procedure at transmission/transfer of a plurality of data files from a transmitting unit to a receiving unit where control commands for request for transmission/transfer of a plurality of data files are received. As response to said control commands, the plurality of data files are placed in a buffer for data files which shall be transmitted/ transferred. Further, the plurality of data files in the buffer is transmitted/transferred from the transmitting unit to a receiving unit via just one asynchronous transmission channel.

By transmitting the plurality of data files via just one asynchronous channel, consequently only one transmission channel need to be established. This results with advantage in a considerably shorter time for establishing transmission channels at transmission/transfer of a plurality of data files than known procedures where a new transmission channel is established for each data file which shall be transmitted/transferred. Further, the use of "slow start" is limited to one time, which results in a better utilization of the bandwidth than procedures according to known technology where "slow start" is used at the transmission/transfer of each data file. All in all, a procedure according to the invention results in a considerably shorter time from when the transmission/transfer of a plurality of data files has been requested until the plurality of data files have been transmitted/transferred than corresponding time for known procedures where a transmission channel is established for each data file.

The control commands which are received in the procedure according to the invention are preferably received via just one asynchronous control channel, at which a share of the control commands are received at the same time as any data file of said plurality of data files is transmitted/transferred and a share of said plurality of data files is placed in said buffer at the same time as any data file of said plurality of data files is transmitted/transferred. In this way also data files which have been requested by means of control commands which have been received after the transmission/transfer has started can be transmitted/transferred in the only transmission channel. An advantage of this is that the transmission/transfer can be made in a shorter time than if a new transmission channel has to be established for transmission of files which have been requested after the transmission has started.

In one embodiment of the invention, the plurality of data files are transmitted/transferred after each other over a TCP-connection. To make it possible to distinguish each data file from the others, is in this embodiment also transmitted/transferred a start byte, which indicates the start of a data file, and an end byte, which indicates the end of a data file, for each data file.

In another embodiment of the invention, each of said plurality of data files are divided into segments, and these segments are packeted in a data part of data packet each. These data packets are provided with a head each which includes administrative information and the plurality of data files are transmitted/transferred in said data packets. According to this embodiment, the administrative information can be utilized to distinguish a data file from the other data files. In this respect the administrative information preferably includes an identification of the data file to which the data packet relates. This embodiment also makes possible a simple way to transmit/transfer data files in just any sequence. In this respect, control commands for request for transmission/transfer of a prioritized data file are received in the transmitting unit. The prioritized data file is divided into segments and the segments are packeted in a data part of a prioritized data packet each. The prioritized data packets are each provided with a head which includes an identification of the prioritized data file to which the prioritized data packet relates. The prioritized data packets are then transmitted/transferred prior to other data packets. Further there is according to this embodiment, alternative ways to distinguish a data file from other data files by different types of data packets being transmitted/ transferred. With this aim, the administrative information further preferably includes a type designation. The ^{p}ackets which include a segment consequently include a type designation which indicates that the data part of the data packet includes a segment of a data file. In a first alternative way to distinguish data files is, for each of the plurality of data files, a data packet transmitted/ transferred which includes a type designation which indicates that the data part of this data packet includes a size of a data file. The data part of this data packet then includes the size of the data file to which this data packet relates. In a second alternative way is transmitted/transferred the last segment of each of the plurality of data files in a data packet the head of which includes a type designation which indicates that the data part of the data packet includes the last segment of a data file. One advantage of this is that the transmission will be of shorter duration than for known methods where different files are marked off by a new connection being set up.

### Brief description of the drawings

The invention will be described in detail in the following with reference to enclosed drawings, in which
Figure 1 shows a system in which the present invention can be applied with advantage,
Figure 2 shows a flow chart for a first embodiment of a procedure according to the invention,
   A = Start
   B = Receive control commands
   C = Place files in buffer
   D = Add indication for start of file and end of file
   E = Transmit/transfer files
   F = Stop
Figure 3 shows a flow chart for a second embodiment of a procedure according to the invention,
   A = Start
   B = Receive control commands
   C = Divide files into segments
   D = Place segments in the data part of a data packet
   E = Place data packets in buffer
   F = Transmit/transfer data packets
   G = Stop
Figure 4 shows a data packet which is used at the embodiment in Figure 3.

### Description of preferred embodiments

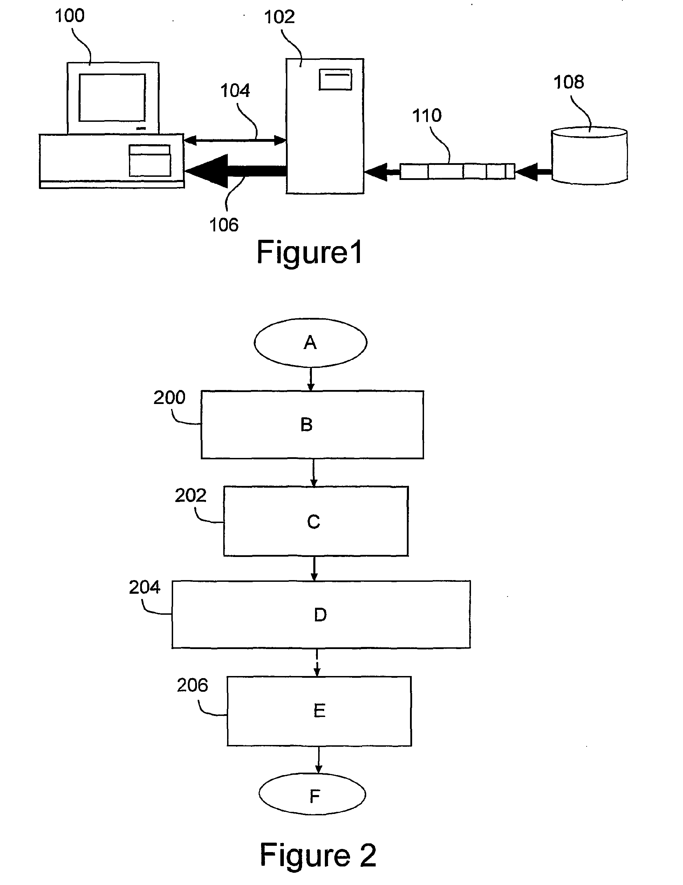

In Figure 1 is shown a system in which the present invention can be applied with advantage. Between a computer 100 and a file server 102 a control channel 104 and a transmission channel 106 can be established. In connection to the file server there is a file system 108 and a buffer 110. The control channel and the transmission channel are established for instance by means of TCP-connections between logic ports (not shown) in the computer 100 and the file server 102. At transmission/transfer of data files from the file server 102 to the computer 100, the data files are taken from the file system 108 and are placed in the buffer 110 before they are transmitted/transferred via the transmission channel 106.

In the following a first embodiment of a procedure according to the invention will be described with reference to Figure 2, in which a flow chart for this embodiment is shown. A user of a receiving unit, such as a computer, wants to derive a plurality of data files from a transmitting unit, such as a file server by means of FTP. Consequently a transmission channel is established in form of a TCP-connection from a logic port in the transmitting unit to a logic port in the receiving unit according to procedures which are known to the expert. Further are also established a corresponding TCP-connection for a logic port in the transmitting unit to a logic port in the receiving unit, at which this TCP-connection functions as a control channel for transmission of control commands from the receiving unit to the transmitting unit. According to known procedures, the user then transmits/transfers control commands for request for transmission/transfer of the plurality of data files. Of course can also other control commands be transmitted, such as control commands for navigation and listing of data files etc. The transmitting unit then receives the control commands for request for transmission of the plurality of data files in a step 200. Bach data file of the plurality of data files is taken from a file system in connection to the file server and is placed in a buffer for data files which shall be transmitted/transferred in a step 202. For each data file in the buffer a start indication is placed which indicates the beginning of the data file, and an end indication, which indicates the end of the data file, in a step 204. The plurality of data files are then together with said start and end indications transmitted/transferred from the transmitting unit to the receiving unit via the transmission channel. By the files being placed in a buffer they can be transmitted/transferred as just one flow of byte, which in its turn results in that they can be regarded as one data file with regard to the transmission. This means that just one TCP-connection can be used for the transmission/transfer of all the files. Instead of, as according to known procedures, indicating the end of the transmission of a file by the TCP-connection being disconnected, the start and end indications are utilized to distinguish between the data files in the receiving unit.

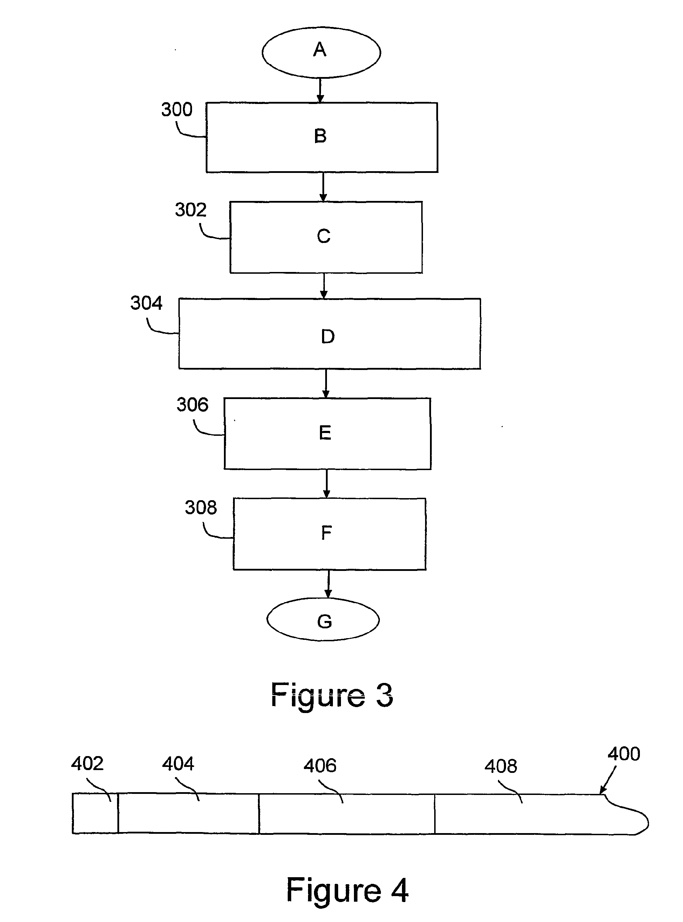

In the following, a second embodiment of a procedure will be described with reference to Figure 3 and Figure 4. In Figure 3 a flow chart for this embodiment is shown, and in Figure 4 a data packet which is used in this embodiment is shown. As for the embodiment which is described with reference to Figure 2, a user of a receiving unit, such as a computer, wants to derive a plurality of data files from a transmitting unit, such as a file server, by means of FTP. A transmission channel and a control channel are established in form of TCP-connections and the user transmits/transfers control commands for request for transmission/transfer of the plurality of data files according to what is described above with reference to Figure 2. According to this embodiment, the transmitting unit then receives the control commands for request for transmission/transfer of the plurality of data files in a step 300. Each data file of the plurality of data files are now divided into segments which are packeted in a data part of a data packet each, 400 (see Figure 4). The size of the segments can be chosen freely. The data packets consist of a head 402-406 for administrative information and a data part 408 for data. The head 402-406 includes a type byte 402 which indicates which type of data the data part of the data packet includes. The types of data which the data part of a data packet can contain is a name of a data file, a size of a data file, or a segment of a data file, which are indicated by a type byte with the value 1, 2 respective 255. Data packets the data part of which include different types of data consequently have different type byte. The head 402-406 further includes three size byte which include the size of the data part of the data packet expressed in number of byte, and four file identity byte which include an identification of the data file to which the data packet relates. When a segment has been packeted in a data packet this data packet is placed in a buffer in a step 306. For each data file is also created a data packet 400 of above described type, the type byte of which indicate that the data part of the data packet includes a name of a data file, and the data part of which includes the name of the data file to which the data packet relates. Further are created for each data file a data packet 400 of above described type, the type byte of which indicate that the data part of this data packet includes a size of a data file, and the data part of which includes the size of the data file to which this data packet relates. All data packets are then transmitted/transferred in a step 308 via the transmission channel. The data packets can be regarded as a data file with regard to the transmission. This means that just one TCP-connection can be used for the transmission/transfer of all files. Instead of, as according to known procedures, indicating the end of the transmission/transfer of a file by the TCP-connection being disconnected, the administrative information in the data packets are utilized for distinguishing between the data files in the receiving unit. Examples of the data packets which are transmitted/transferred at the transmission/ transfer of the data file "filename.bin" of 5 kB is shown in Table 1 below.

**Table 1**

| TYPE | SIZE | ID | DATA |
|---|---|---|---|
| | | | |
| [ 1 : | 11 : | 1 : | "filename.bin" ] |
| [ 2 : | 4 : | 1 : | 5000 ] |
| [ 255 : | 1024 : | 1 : | *1 kB* data *from file name.bin*] |
| [ 255 : | 1024 : | 1 : | *1 kB data from file name.bin*] |
| [ 255 : | 1024 : | 1 : | *1 kB data from file name.bin*] |
| [ 255 : | 1024 : | 1 : | *1 kB data from file name.bin*] |
| [ 255 : | 1024 : | 1 : | *1 kB data from file name.bin*] |

As an alternative to transmitting/transferring a data packet which indicates the size of the data file for each data file, a data packet the type byte of which indicates that it contains the last segment of a data file can be transmitted/transferred for each data file to make it possible for the receiving unit to know when the whole data file has been received.

According to the embodiment which has been described above with reference to Figure 3, data packets from different data files can be alternated at the transmission/transfer. Said file identity byte causes that the receiving unit knows to which data file a data packet relates, and said size byte causes that the receiving unit can find next data packet. For instance can control commands which are received in the file server indicate that the data file which is requested shall be transmitted/ transferred in data packets which are prioritized. This is for instance suitable if transmission/transfer of a big data file has started and the user wants to transmit/ transfer a small data file before the transmission/transfer of the big file has been finished. In Table 2 there is an example of the data packets which are transmitted/ transferred when a small data file "smallfile.bin" of 2 kB is transmitted/transferred prioritized at the same time as the big data file "bigfile.bin" of 10MB is transmitted/ transferred.

**Table 2**

| TYPE | SIZE | ID | DATA |
|---|---|---|---|
| [ 1 : | 11 : | 1 : | "bigfile.bin" ] |
| [ 2 : | 4 : | 1 : | 10000000 ] |
| [ 255 : | 2048 : | 1 : | *1 kB data from bigfile.bin* ] |
| [ 255 : | 2048 : | 1 : | *1 kB data from bigfile.bin* ] |
| [ 1 : | 12 : | 2 : | "smallfile.bin" ] |
| [ 2 : | 4 : | 2 : | 2000 ] |
| [ 255 : | 1024 : | 2 : | *1 kB data from smallfile.bin* ] |
| [ 255 : | 1024 : | 2 : | *1 kB data from smallfile.bin* ] |
| [ 255 : | 2048 : | 1 : | *1 kB data from bigfile.bin* ] |
| [ ... : | ... : | .. : | ... ] |
| [ 255 : | 2048 : | 1 : | *1 kB data from bigfile.bin* ] |

It is realized that the size which has been selected for the segments will influence the period of time before a prioritized data file can be transmitted/transferred after the control command for transmission/transfer of the prioritized data file has been received in the transmitting unit. It is also realized that the data files which are transmitted/transferred in the data packets need not be a data file in the transmitting unit, but also can be information about the file system in the transmitting unit, such as listing of catalogs etc. In this way a list over a part of the catalogs in the transmitting unit can be transmitted/transferred in prioritized data packets during the transmission/transfer of a data file.

Shown embodiments of the present invention can with advantage be realized in an implementation which utilizes File Transfer Protocol (FTP).

## Claims

1. Procedure at transmission/transfer of data files from a transmitting unit (102) to a receiving unit (100), including the steps
to, in a transmitting unit (102), receive control commands for request for transmission/transfer of a plurality of data files,
to, as response to said control commands, place said plurality of data files in a buffer (110) for data files which shall be transmitted/transferred, and
to transmit/transfer said plurality of data files in said buffer (110) from said transmitting unit (102) to a receiving unit (100) via just one asynchronous transmission channel (106),
to divide each of said plurality of data files into segments,
to packet each of said segments in a data part (408) of a data packet (400)
to provide each of said data packets (400) with a head (402 - 406), which includes administrative information,
to transmit/transfer said plurality of data files in said data packets (400),
wherein said administrative information includes an identification of the data file to which the data packet (400) relates,
wherein said administrative information further includes the size of the data part of the data packet (400) and a type designation which indicates that the data part of the data packet (400) includes a segment of a data file, and in that said control commands are received via just one asynchronous control channel (104),
**characterized in that** said procedure also comprises the steps of:
receiving a share of said control commands via said control channel (104), at the same time as any data file of said plurality of data files is transmitted/transferred and
placing in said buffer (110) a share of said plurality of data files, at the same time as any data file of said plurality of data files is transmitted/transferred.

2. Procedure as claimed in patent claim 1, at which said transmission channel (106) is a TCP-connection.

3. Procedure as claimed in any of the patent claims 1 - 2, at which said control channel (104) is a TCP-connection.

4. Procedure as claimed in patent claim 2, at which said plurality of data files are transmitted/transferred after each other together with a start indication which indicates the start of a data file, and an end indication which indicates the end of a data file, for each data file.

5. Procedure as claimed in patent claim 1, further including the steps
to, in said transmitting unit (102), receive control commands for request for transmission/transfer of a prioritized data file,
to divide said prioritized data file into segments, to packet said segments in a data part (408) of a prioritized data packet (400) each,
to provide each of said prioritized data packets (400) with a head (402 - 406) which includes an identification of the prioritized data file to which the prioritized data packet (400) relates, and
to transmit/transfer said prioritized data packets (400) prior to other packets.

6. Procedure as claimed in patent claim 1, further including the step
to, for each of said plurality of data files, transmit/transfer a data packet (400) which includes a head (402 - 406) and a data part (408), at which said head (402 - 406) includes a type designation which indicates that the data part (408) of the data packet (400) includes a name of a data file, the size of the data part (408) of the data packet (400), and an identification of the data file to which the data packet (400) relates, and at which said data part (408) includes the name of the data file to which the data packet (400) relates.

7. Procedure as claimed in any of the patent claims 1 or 6, further including the step
to, for each of said plurality of data files, transmit/transfer a data packet (400) which includes a head (402 - 406) and a data part (408), at which said head (402 - 406) includes a type designation which indicates that the data part (408) of this data packet (400) includes a size of a data file, the size of the data part (408) of the data packet (400), and an identification of the data file to which this data packet (400) relates, and at which said data part (408) includes the size of the data file to which this data packet (400) relates.

8. Procedure as claimed in any of the patent claims 1, 6 or 7, at which the last segment of each of the plurality of data files is transmitted/transferred in a data packet (400) the head (402 - 406) of which includes a type designation which indicates that the data part (408) of the data packet (400) includes the last segment of a data file.

9. Computer program including program steps for performance of the steps in a procedure according to any of the patent claims 1-8.

10. A computer readable medium including instructions for performance of the steps in a procedure according to any of the patent claims 1-8.

## Patentansprüche

1. Verfahren bei der Sendung/Übertragung von Dateien von einer sendenden Einheit (102) zu einer empfangenden Einheit (100), das die Schritte aufweist
in einer sendenden Einheit (102) Steueranweisungen für Anforderung von Sendung/Übertragung einer Mehrzahl von Dateien zu empfangen,
als Reaktion auf die Steueranweisungen die Mehrzahl von Dateien in einem Puffer (110) für Dateien anzuordnen, die gesendet/übertragen werden seilen, und
die Mehrzahl von Dateien in dem Puffer (110) von der sendenden Einheit (102) zu einer empfangenden Einheit (100) über nur einen asynchronen Sendekanal (106) zu senden/zu übertragen, senden/zu übertragen,
jede der Mehrzahl von Dateien in Segmente aufzuteilen,
jedes der Segmente in einen Datenteil (408) eines Datenpakets (400) zu packen,
jedes der Datenpakete (400) mit einem Kopf (402 - 406) zu versehen, der Verwaltungsinformation einschließt,
die Mehrzahl von Dateien in den Datenpaketen (400) zu senden/übertragen,
wobei die Verwaltungsinformation eine Identifizierung der Datei einschließt, mit dem das Datenpaket (400) zusammenhängt,
wobei die Verwaltungsinformation weiter die Größe des Datenteils des Datenpakets (400) und eine Typbezeichnung einschließt, die anzeigte dass der Datenteil des Datenpakets (400) ein Segment einer Datei einschließt, und dass die Steueranweisungen über nur einen asynchronen Steuerkanal (104) empfangen werden,
**dadurch gekennzeichnet, dass** das Verfahren auch die Schritte aufweist:
einen Anteil der Steueranweisungen, über den Steuerkanal (104) zur selben Zeit zu empfangen, wie irgendeine Datei der Mehrzahl von Dateien gesendet/übertragen wird, und
in dem Puffer (110) einen Anteil der Mehrzahl von Dateien zur selben Zeit anzuordnen, wie irgendeine Datei der Mehrzahl von Dateien gesendet/übertragen wird.

2. Verfahren nach Patentanspruch 1, bei dem der Sendekanal (106) eine TCP-Verbindung ist.

3. Verfahren nach einem der Patentansprüche 1 - 2, bei dem der Steuerkanal (104) eine TCP-Verbindung ist.

4. Verfahren nach Patentanspruch 2, bei dem die Mehrzahl von Dateien nacheinander zusammen mit einer Startanzeige, die den Start einer Datei anzeigt, und eine Endeanzeige, die das Ende einer Datei anzeigte für jede Datei gesendet/übertragen werden.

5. Verfahren nach Patentanspruch 1, das weiter die Schritte aufweist
in der sendenden Einheit (102) Steueranweisungen für Anforderung für Sendung/Übertragung einer mit Priorität versehenen Datei zu empfangen,
die mit Priorität versehene Datei in Segmente aufzuteilen, diese Segmente jeweils in einen Datenteil (408) eines mit Priorität versehenen Datenpaketes (400) zu packen,
jedes der mit Priorität versehenen Datenpakete (400) mit einem Kopf (402 - 406) zu versehen, der eine Identifizierung der mit Priorität versehenen Datei einschließt, mit der das mit Priorität versehene Datenpaket (400) zusammenhängt, und
die mit Priorität versehenen Datenpakete (400) vor anderen Paketen zu senden/übertragen.

6. Verfahren nach Patent anspruch 1, das weiter den Schritt aufweist
für jede der Mehrzahl von Dateien ein Datenpaket (400) zu senden/übertragen, das einen Kopf (402 - 406) und einen Datenteil (408) einschließt, wobei der Kopf (402 - 406) eine Typenbezeichnung einschließt, die anzeigt, dass der Datenteil (408) des Datenpakets (400) einen Namen einer Datei, die Größe des Datenteils (408) des Datenpakets (400) und eine Identifizierung der Datei anzeigt, mit der das Datenpaket (400) zusammenhängt, wobei der Datenteil (408) den Namen der Datei einschließt, mit dem das Datenpaket (400) zusammenhängt.

7. Verfahren nach einem der Patentansprüche 1 oder 6, das weiter den Schritt einschließt
für jede der Mehrzahl von Dateien ein Datenpaket (400) zu senden/übertragen, das einen Kopf (402 - 406) und einen Datenteil (408) einschließt, wobei der Kopf (402 - 406) eine Typenbezeichnung einschließt, die anzeigt, dass der Datenteil (408) dieses Datenpakets (400) eine Größe einer Datei, die Größe des Datenteils (408) des Datenpakets (400) und eine Identifizierung der Datei enthält, mit der dieses Datenpaket (400) zusammenhängt, und bei dem der Datenteil (408) die Größe der Datei einschließt, mit der dieses Datenpaket (400) zusammenhängt.

8. Verfahren nach einem der Patentansprüche 1, 6 oder 7, bei dem das letzte Segment jeder der Mehrzahl von Dateien in einem Datenpaket (400) gesendet/übertragen wird, dessen Kopf (402 - 406) eine Typenbezeichnung einschließt, die anzeigt, dass der Datenteil (408) des Datenpakets (400) das letzte Segment einer Datei einschließt.

9. Computerprogramm, das Programmschritte zum Durchfühder Schritte in einem Verfahren gemäß einem der Patentansprüche 1 bis 8 einschließt.

10. Computerlesbares Medium, das Anweisungen zum Durchführen der Schritte in einem Verfahren gemäß einem der Patentansprüche 1 bis 8 einschließt.

## Revendications

1. Procédé de transmission / transfert de fichiers de données d'une unité de transmission (102) à une unité de réception (100), comprenant les étapes suivantes :
recevoir, dans une unité de transmission (102), des instructions de commande pour demander la transmission / le transfert d'une pluralité de fichiers de données,
en réponse aux dites instructions de commande, placer la dite pluralité de fichiers de données dans un tampon (110) pour des fichiers de données qui doivent être transmis / transférés, et
transmettre / transférer la dite pluralité de fichiers de données contenus dans le dit tampon (110) de la dite unité de transmission (102) à une unité de réception (100) via juste un canal de transmission asynchrone (106),
diviser chacun de la dite pluralité de fichiers de données en segments,
mettre en paquets chacun des dits segments dans une partie données (408) d'un paquet de données (400),
pourvoir chacun des dits paquets de données (400) avec un en-tête (402-406), qui contient des informations administratives,
transmettre / transférer la dite pluralité de fichiers de données dans les dits paquets de données (400),
dans lequel les dites informations administratives comprennent une identification du fichier de données auquel le paquet de données (400) se rapporte, et
dans lequel les dites informations administratives comprennent en outre la dimension de la partie données du paquet de données (400) et une désignation de type qui indique que la partie données du paquet de données (400) comprend un segment d'un fichier de données, et les dites instructions de commande sont reçues via juste un canal de commande asynchrone (104) ;
**caractérisé en ce que** le dit procédé comprend également les étapes de :
réception d'une portion des dites instructions de commande via le dit canal de commande (104), en même temps qu'un fichier de données quelconque de la dite pluralité de fichiers de données est transmis 1 transféré, et
mise en place dans le dit tampon (110) d'une portion de la dite pluralité de fichiers de données, en même temps qu'un fichier de données quelconque de la dite pluralité de fichiers de données est transmis / transféré.

2. Procédé selon la revendication 1, dans lequel le dit canal de transmission (106) est une connexion TCP.

3. Procédé selon une quelconque des revendications 1 et 2, dans lequel le dit canal de commande (104) est une connexion TCP.

4. Procédé selon la revendication 2, dans lequel la dite pluralité de fichiers de données sont transmis / transférés les uns après les autres en même temps qu'une indication de début qui indique le début d'un fichier de données, et une indication de fin qui indique la fin d'un fichier de données, pour chaque fichier de données.

5. Procédé selon la revendication 1, comprenant en outre les étapes suivantes :
recevoir, dans la dite unité de transmission (102), des instructions de commande pour demander la transmission / le transfert d'un fichier de données prioritaire,
diviser le dit fichier de données prioritaire en segments, pour mettre en paquets les dits segments chacun dans une partie données (408) d'un paquet de données prioritaire (400),
pourvoir chacun des dits paquets de données prioritaire (400) d'un en-tête (402-406) qui contient une identification du fichier de données prioritaire auquel le paquet de données prioritaire (400) se rapporte, et
transmettre / transférer les dits paquets de données prioritaires (400) avant les autres paquets.

6. Procédé selon la revendication 1, comprenant en outre l'étape suivante :
pour chacun de la dite pluralité de fichiers de données, transmettre / transférer un paquet de données (400) qui contient un en-tête (402-406) et une partie données (408), le dit en-tête (402-406) contenant une désignation de type qui indique que la partie données (408) du paquet de données (400) contient un nom d'un fichier de données, la dimension de la partie données (408) du paquet de données (400) et une identification du fichier de données auquel le paquet de données (400) se rapporte, et la dite partie données (408) contenant le nom du fichier de données auquel le paquet de données (400) se rapporte.

7. Procédé selon une quelconque des revendications 1 ou 6, comprenant en outre l'étape suivante :
pour chacun de la dite pluralité de fichiers de données, transmettre / transférer un paquet de données (400) qui contient un en-tête (402-406) et une partie données (408), dans lequel le dit en-tête (402-406) contient une désignation de type qui indique que la partie données (408) de ce paquet de données (400) contient une dimension d'un fichier de données, la dimension de la partie données (408) du paquet de données (400), et une identification du fichier de données auquel ce paquet de données (400) se rapporte, et la dite partie données (408) contient la dimension du fichier de données auquel se rapporte ce paquet de données (400).

8. Procédé selon une quelconque des revendications 1, 6 ou 7, dans lequel le dernier segment de chacun de la pluralité de fichiers de données est transmis / transféré dans un paquet de données (400) dont l'en-tête (402-406) contient une désignation de type qui indique que la partie données (408) du paquet de données (400) contient le dernier segment d'un fichier de données.

9. Programme d'ordinateur incluant des étapes de programme pour l'exécution des étapes d'un procédé selon une quelconque des revendications 1 à 8.

10. Support lisible par ordinateur incluant des instructions pour l'exécution des étapes d'un procédé selon une quelconque des revendications 1 à 8.
